# EUROPEAN PATENT APPLICATION

(11) **EP 4 841 590 A1**
(43) Date of publication of application: **18.11.2026**
(21) Application number: 25177055.8
(22) Date of filing: 16.05.2025
(51) Int. Cl.: G06V 20/58, G06V 10/82, G06V 10/80, G06N 3/045

(54) **DEVICE AND METHOD FOR DETECTING AN OBJECT IN AN ENVIRONMENT OF A ROBOT DEVICE**

(71) Applicant: Robert Bosch GmbH, 70442 Stuttgart (DE)
(72) Inventor: Cattaneo, Daniele, 79115 Freiburg (DE); Cicek, Oezguen, 79106 Freiburg (DE); Valada, Abhinav, 79102 Freiburg (DE); Kaeppeler, Markus, 79110 Freiburg im Breisgau (DE)

(57) **Abstract**

According to various embodiments, a method for detecting an object in an environment of a robot device is described, comprising collecting one or more images of the environment from a point of view of the robot device, extracting point of view features from the one or more images, determining bird's eye view features from the point of view features, determining map features from a map of the environment and detecting one or more objects in the environment by a machine learning model, wherein the machine learning model is supplied with the point of view features, the bird's eye features and the map features and combines the point of view features, the bird's eye features and the map features using one or more cross-attention layers.

## Description

The present disclosure relates to devices and methods for detecting an object in an environment of a robot device.

Controlling a robot device, which may also include an autonomous operation of a robot device, such as a (e.g. an autonomous) vehicle, typically requires gathering knowledge about its environment, including in particular about the presence and behavior of objects around the robot device. In case of an autonomous vehicle, this includes other vehicles which should be detected and possibly also be tracked to get information on how they behave (e.g. to determine in which direction they are moving). Usually, camera images as well as LiDAR data is used for object detection and tracking and while good results can be achieved based on this kind of by conventional approaches, approaches which increase accuracy and reliability of object detection and/or tracking are still desirable.

According to various embodiments, a method for detecting an object in an environment of a robot device is provided, comprising collecting one or more images of the environment from a point of view of the robot device, extracting point of view (POV) features from the one or more images, determining bird's eye view (BEV) features from the point of view features, determining map features from a map of the environment and detecting one or more objects in the environment by a machine learning model, wherein the machine learning model is supplied with the point of view features, the bird's eye features and the map features and combines the point of view features, the bird's eye features and the map features using one or more cross-attention layers.

The method described above allows combines the strengths of PV-based approaches and BEV-approaches for object detection and/or tracking. PV features are effective at capturing object-centric details while BEV features capture the scene in a structured metric representation, making it easier to reason about the whole environment (or scene) with both dynamic objects and the static surroundings in a unified representation.

Further, a (e.g. HD) map is incorporated (and can be seen to be used as prior) to increase object detection and/or tracking. Given their availability and the feasibility of automatic construction through large-scale mapping methods, leveraging HD maps as priors enhances detection and tracking performance. So, by integrating e.g. annotated rasterized HD maps into a camera-only framework, their geometrically accurate priors are leveraged to complement online-estimated BEV information (e.g. online-estimated BEV maps).

In the following, various examples are given.

Example 1 is a method for detecting an object in an environment of a robot device as described above.

Example 2 is the method of example 1, wherein the one or more cross-attention layers are deformable aggregation layers.

Deformable aggregation layers provide an effective and robust attention mechanism for object detection, e.g. because they allow the model to model to adaptively adjust the sampling locations, making it more effective at capturing spatially varying features.

Example 3 is the method of example 1 or 2, wherein the machine learning model has a transformer architecture.

Transformers are effective detection models, e.g. because they include self-attention mechanisms which allow them to capture long-range dependencies and global context within image data. This is particularly useful for understanding complex scenes where objects may be related over large distances

Example 4 is the method of any one of examples 1 to 3, comprising performing detection of one or more objects repeatedly over time and tracking the one or more objects by correlating detected object instances.

So, for example at different points in time (i.e., different frames in a video, i.e. a temporal sequence of POV images), the model detects and identifies objects for each point in time (by performing the above steps for each of the points in time) and the machine learning model (which also acts as a tracking model in this case) establishes correspondences between these detections across different points in time. This involves matching detected objects from POV image data acquired at one point in time with those detected from POV image data acquired at a subsequent point in time.

Example 5 is the method of any one of examples 1 to 4, comprising extracting point of view features from the one or more images by a pre-trained image encoder model.

For example, a foundation model, e.g. a vision transformer or a stable diffusion model, e.g. DINOv2, is used for extracting the POV features. There are pre-trained image encoder models available which provide features which are effective for object detection and tracking.

Example 6 is the method of any one of examples 1 to 5, comprising determining the bird's eye view features from the point of view features by a bird's eye view feature distillation model and training at least the bird's eye view feature distillation model using a supervised loss determined from pseudo-labels for bird's eye view features, wherein the pseudo-labels for bird's eye view features are determined by projecting the point of view features to a LiDAR (light detection and ranging) point cloud of the environment followed by pooling point of view features over the height axis.

This allows effective training of the bird's eye view feature distillation model. It should be noted that the supervised loss may be a loss component of a total training loss for training the whole detection model (i.e. the model also including the machine learning model doing the detection.

Example 7 is the method of any one of examples 1 to 6, comprising, for each time point of a sequence of time points, collecting one or more images of the environment from a point of view of the robot device, extracting point of view features from the one or more images and projecting the point of view features to a respective LiDAR point cloud of the environment, wherein determining the pseudo-labels further comprises accumulating the projected point of view features over at least some of the sequence of times points.

This trains the bird's eye view feature distillation model to provide rich descriptive BEV features thus, allowing detection and tracking with high accuracy.

Example 8 is a method for controlling a robot device, comprising performing detection of one or more objects in an environment of the robot device according to any one of examples 1 to 7 and controlling the robot device according to a result of the detection.

For example, a vehicle or a robot arm may be controlled to avoid collision with detected objects. This for example involves planning a trajectory of the vehicle and robot arm and controlling the vehicle or robot arm to follow the trajectory.

Example 9 is a data processing device (e.g. robot device controller), configured to perform a method of any one of examples 1 to 8.

Example 10 is a computer program comprising instructions which, when executed by a computer, makes the computer perform a method according to any one of examples 1 to 8.

Example 11 is a computer-readable medium comprising instructions which, when executed by a computer, makes the computer perform a method according to any one of examples 1 to 8.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a vehicle.
Figure 2 illustrates a machine learning (ML) model 200 for 3D object detection and tracking according to an embodiment.
Figure 3 shows an object detection and/or tracking model according to an embodiment.
Figure 4 illustrates a training of a machine learning (ML) model for 3D object detection and tracking according to an embodiment.
Figure 5 shows a flow diagram illustrating a method for detecting an object in an environment of a robot device.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

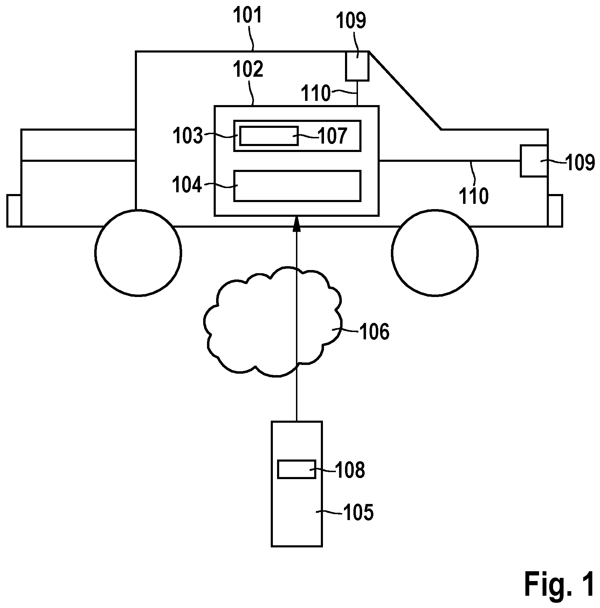

Figure 1 shows a vehicle (as an example of a robot device that is controlled).

In the example of figure 1, a vehicle 101, for example a car or truck, is provided with a vehicle control device (also referred to as an electronic control unit, e.g. a control unit, e.g. an electronic control unit (ECU)) 102.

The vehicle control device 102 has data processing components, e.g. a processor (e.g. a CPU (central processing unit)) 103 and a memory 104 for storing control software 107, according to which the vehicle control device 102 operates, and data processed by the processor 103. The processor 103 executes the control software 107.

For example, the stored control software (computer program) has instructions which, when executed by the processor, cause the processor 103 to perform driver assistance functions (i.e. the function of an ADAS (Advanced Driver Assistance System)) or even autonomously control the vehicle (AD (Autonomous Driving)).

The control software 107 is transferred, for example, from a computer system 105 to the vehicle 101, e.g. via a network 106 (or also with the aid of a storage medium such as a memory card). This can also be done during operation (or at least when the vehicle 101 is with the user), as the control software 107 is updated to new versions over time, for example. The control software 107 may in particular include a machine learning model 108, e.g. for object detection and/or tracking, which is trained by the computer system 105.

The control software 107 determines control actions for the vehicle (such as steering actions, braking actions, etc.) from input data that is available to it and that contains information about the environment or from which it derives information about the environment (such as by detecting other road users, e.g. other vehicles). These are, for example, sensor data from one or more sensor devices 109, such as from a camera of the vehicle 101, a RADAR sensor, a LiDAR sensor, an ultrasonic sensor, etc., which are connected to the vehicle control device 102 via a communication system 110 (e.g. a vehicle bus system such as CAN (Controller Area Network)).

Camera-based 3D object detection and multi-object tracking (e.g. of other road users, pedestrians, etc.) are fundamental tasks in an autonomous driving pipeline (as e.g. implemented by the control software 107), enabling reliable perception for downstream prediction and planning. Methods for this can be categorized into two main approaches: perspective-view (PV)-based and bird's-eye-view (BEV)-based detection and tracking. PV-based methods rely on camera image features directly. They thus operate in perspective space, limiting their capacity to store spatial scene information effectively.

BEV-based approaches transform camera image features into a top-down BEV metric representation, offering advantages in spatial reasoning but potentially discarding fine-grained details during the transformation. They benefit from a structured metric representation that encodes and stores static surroundings but lack direct access to PV features, making them less effective at capturing object-centric details.

Vision foundation models such as DINOv2 (Distillation with NO labels), CLIP (Contrastive Language-Image Pre-training), and Stable Diffusion have demonstrated remarkable generalization capabilities across diverse vision tasks. These foundation models may be used to distill general-purpose features into 3D space, enabling label-efficient BEV and 3D occupancy semantic segmentation.

Camera-based 3D object detection and multi-object tracking methods typically lack generalization beyond training datasets and reasoning about the static world around them. To address this issue, according to various embodiments, approaches for Camera-based 3D object detection and multi-object tracking are provided which incorporate foundation model distillation and inputting static environment information in the form of (e.g. a high-definition (HD)) BEV map.

So, according to various embodiments, an approach is provided that integrates multiple map representations-latent BEV maps guided by foundation model features and rasterized HD maps-to improve 3D object detection and tracking. By incorporating these maps into a detection model, e.g. a transformer detection head through cross-attention, additional scene context is provided to the detection model to refine object detection and tracking performance. Further, according to various embodiments, both PV and BEV camera image features are used by the detection model for detection (and e.g. tracking), thus integrating the strengths of both representations into a hybrid model.

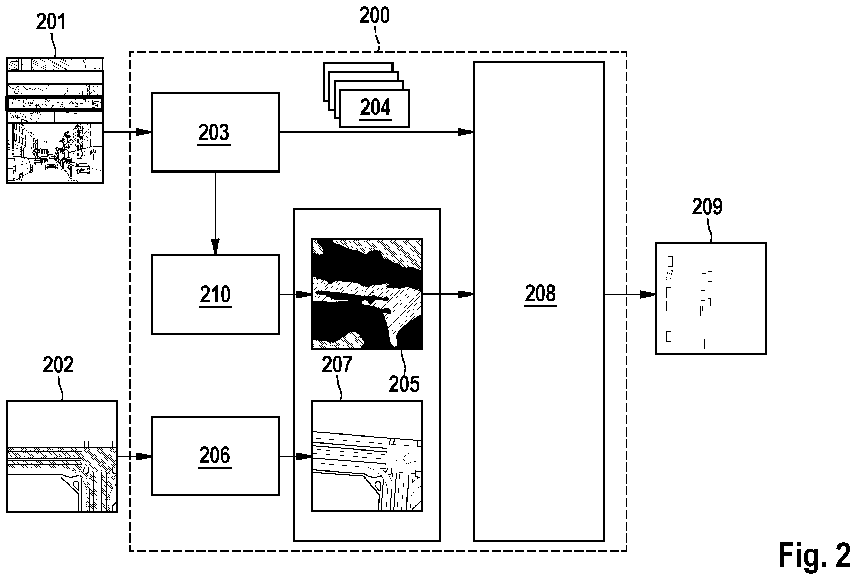

Figure 2 illustrates a machine learning (ML) model 200 for 3D object detection and tracking according to an embodiment.

The inputs to the ML model 200 are a plurality of images 201 (or one surround-view camera image), e.g. taken from cameras (among the sensor devices 109) of the vehicle 101 pointing into different directions (i.e. the images are multi-view (e.g. RGB) images from different POVs of the vehicle) as well as a (rasterized) HD map 202 of an environment, e.g. of the vehicle 101, which the vehicle may have stored or download. It should be noted that what is described here for a plurality of images 201 may be understood as the processing for one frame, i.e. one instance of acquiring a plurality of images 201, when the vehicle 101 is it a certain current position in its environment, in a (temporal) sequence of instances. Accordingly, the processing for one plurality of images 201 may be done per frame, i.e. repeatedly for a sequence of points in time (i.e. image acquisition times and/or detection times). Results from one processing are typically also used for consecutive ones, in particular for object tracking.

The images 201 are processed by an image encoder 203 (e.g. a DINOv2 vision transformer (ViT)) which generates features for the images 201 (or, in other words), extracts features from the images 201 (based on pixel values of the images 201, e.g. information about the presence of certain patterns). Since they are extracted from the POV images 201, these features are referred to as POV features 204.

The POV features are fed to a BEV mapping model 210 (e.g. neural network) which transforms the POV features into top-down BEV features 205 (i.e. a feature map around the vehicle 101 in birds-eye view). This means that a neural network, for example, which gets the POV features (of different camera views) translates the POV features from perspective view to BEV. This view transformation (VT) can for example be an LSS(lift-splat-shoot)-based view transformation such as BEVDet, BEVDepth, and MatrixVT, etc., or a query-based view transformation such as BEVFormer. According to LSS, an estimated depth distribution is used to lift image features into camera frustum point clouds, which are fused among cameras by pooling to BEV to form unified BEV grid features. The depth map is for example predicted by a DepthNet. The view transformation from POV to BEV may be followed by a BEV feature encoder (e.g. neural network), e.g. consisting of multiple ResNet blocks and a small feature pyramid network (FPN), to get the final BEV features 205.

Further, a map encoder 206 generates HD map (BEV) features 207 from the HD (BEV) map 202, i.e. from a section of a HD map showing the vicinity of the vehicle 101 according to its current position.

For example, the map encoder 206 rasterizes the HD map 202 to a BEV map (one-hot encoding of each semantic class in each channel) and uses convolutional neural network layers (e.g. the first two stages of a ResNet18) to encode it into a BEV feature map. More specifically, for example, for the ResNet18, the stem is replaced with a 3x3 convolution with stride 1 to not downsample too much and the base channels are set to 128 so that the BEV HD map features 207 have 256 features after encoding.

HD maps offer structured spatial priors for object placement (e.g., vehicles on roads, pedestrians on sidewalks) and motion patterns (e.g., vehicles following lanes), enhancing tracking consistency.

The POV features 204, the BEV features 205 and the map features 207 are fed to an object detection and/or tracking model 208 for object detection (and possibly also object tracking) generating an object detection and/or tracking result 209 (which is used, for example, by the controller 102 to control the vehicle 101). It should be noted that object tracking involves, at least for initialization, object tracking, so an object tracking model is understood to include an object detection model (at least as a component).

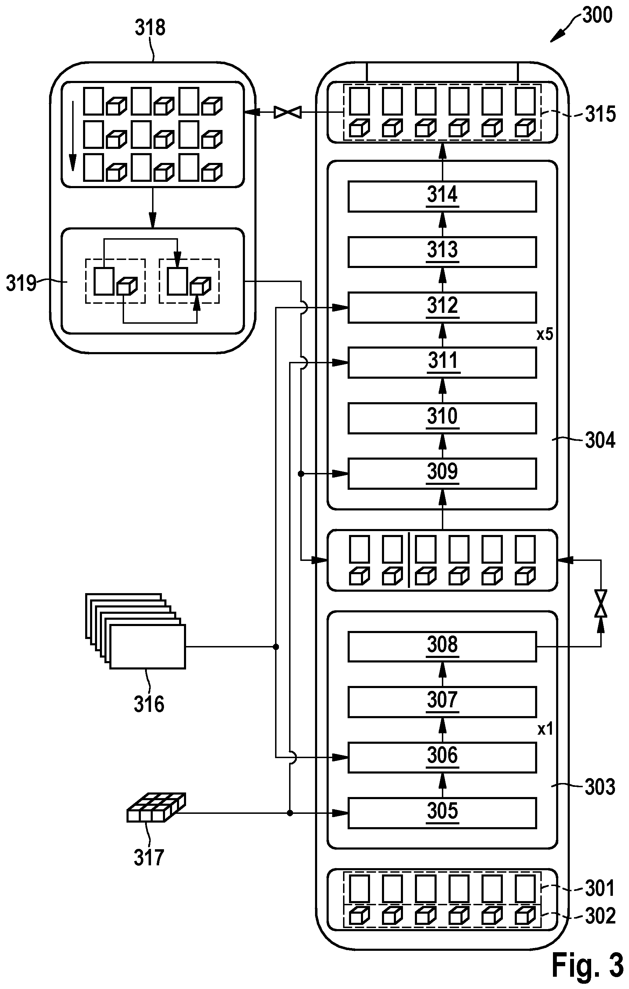

According to various embodiments, follows a transformer architecture as illustrated in figure 3.

Figure 3 shows an object detection and/or tracking model 300 (i.e. a detection and tracking head) according to an embodiment.

The object detection and/or tracking model 300 processes learnable object queries (initialized detection instances) consisting of instance features 301 and initialized 3D anchor boxes 302. Each anchor box 302 is encoded into a high-dimensional embedding via an anchor encoder and fused with the instance feature by addition before each transformer block to form object queries.

The object detection and/or tracking model 300 comprises a decoder network which is composed of a non-temporal block 303 followed by a stack of five temporal blocks 304.

The non-temporal block 303 consists of BEV Deformable Aggregation 305, PV Deformable Aggregation 306, a feedforward network (FFN) 307, and 3D box refinement/classification heads 308.

Each temporal block 304 consists of temporal cross-attention 309 (attending to memory from past frames), self-attention across current queries 310, BEV deformable aggregation 311 and PV deformable aggregation 312, an FFN 313, and refinement/classification heads 314 which output object detection instances 315.

In each of these decoder layers 303, 304, object queries interact with both the PV features 316 (corresponding to the POV features 204) and the BEV features 317 (corresponding to BEV features 205) using deformable aggregation (which can be seen as a (deformable) attention mechanism). For PV deformable aggregation 306, 312 ("PV-DeformAgg"), fixed and learnable 3D anchor key points are projected into the image plane of each camera to bilinear-sample multi-scale multi-view PV features Fpy. For BEV deformable aggregation 305, 311 ("BEV-DeformAgg"), the 3D anchor key points are projected into the BEV feature grid to bilinear-sample features F_{BEV} accordingly. The sampled multi-key point, multi-view, multi scale features are then fused via learned attention weights and used to update the query's instance feature with residual connections: $f {′}_{i} = {f}_{i} + BEV - DeformAgg \left({f}_{i}, {a}_{i}, {F}_{BEV}\right) ,$ $f {"}_{i} = f {′}_{i} + PV - DeformAgg \left(f{′}_{i}, {a}_{i}, {F}_{PV}\right) ,$ where fᵢ is the instance feature and aᵢ the anchor of the i-th object query while DeformAgg·(·) denotes deformable aggregation from the respective modality (i.e. BEV feature or POV feature).

In more detail, according to various embodiments, in each BEV deformable aggregation layer 305, 311, first fixed and learnable 3D key points are generated. Fixed key points are points on each side of the respective anchor box and at the center, i.e. seven fixed key points for each anchor box, and learnable key points are six key points that are predicted via a linear layer from the instance feature but are restricted to be within the anchor box via a sigmoid. These key points are then projected to BEV to bilinear sample BEV features at the projected points and aggregated/fused via a weighted sum with learnable weights to update the instance feature that corresponds to the respective anchor box. In comparison to the PV deformable aggregation 316, 312, the key points are not projected to multiple views, just to the BEV perspective and only BEV features of a single scale are aggregated.

The map BEV features 207 are incorporated similarly to the PV features 316 and BEV features 317 using deformable aggregation (not shown in figure 3 for simplicity).

This sequential aggregation of the object detection and/or tracking model 300 (by the deformable aggregation layers 305, 306, 311, 312) enables effective fusion from both BEV and PV representations to leverage their complementary strengths.

For tracking, for a current frame, object queries from the previous frame are propagated using ego-motion and velocity estimates. A temporal memory queue 318 stores instance features and anchors, which are propagated (by temporal propagation 319) to the current frame and combined with the top-k confident detections of the detections 315 from the non-temporal block 303 to be fed to the first one of the temporal blocks 304.

Additionally, these queries are incorporated via the temporal cross-attention (as key and value) 309. Tracking is achieved by assigning persistent IDs (identifications) to queries maintained across frames.

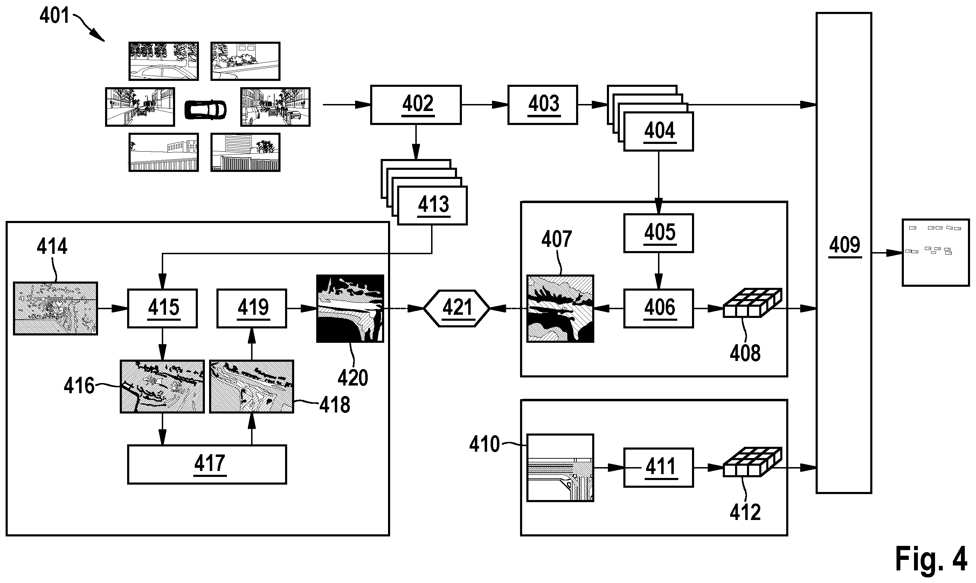

According to various embodiments, during training of the ML model 200, to further enrich the BEV representation with descriptive features from a pretrained foundation model (such as DINOv2), the POV image features 204 (e.g. DINOv2 features) are distilled into BEV features 205 via offline pseudo-label generation for the BEF features (i.e. for the training of the BEV mapping model 210), as illustrated in figure 4.

Figure 4 illustrates a training of a machine learning (ML) model for 3D object detection and tracking according to an embodiment.

As described with reference to figure 2, the machine-learning model takes a plurality of camera images 401 as an input from which (multi-view) POV features 404 are extracted (here by a (pre-trained) DINOv2 ViT 402 (e.g. using a multi-scale ensemble) followed by an adapter 403, e.g. one or more trainable layers of the ML model to adapt to the present use case).

The POV features 404 are mapped to BEV view by a camera to BEV view transformation 405 and a BEV feature encoder 406 generates BEV features 407, 408 (as also described with reference to figure 2), here in the form of a BEV feature map 407 and as BEV features 408 for input to an object detection and/or tracking model 309. For training this generation of the BEV features from the POV features, the depth map is for example supervised with LiDAR depth during training and further refined using CRF (conditional random field) modulation to encourage object-level consistency and reduce lifting artifacts.

Further, as described with reference to figure 2, the object detection and/or tracking model 409 gets HD map features 412 as input which are provided by an HD map encoder 411 from an HD map 410.

For training the adapter 403, the BEV view transformation 405 and the BEV feature encoder 406, which may together be seen as forming a BEV feature distillation model, the output of the DINOv2 ViT 402, denoted as DINOv2 features 413, are projected onto a LiDAR point cloud 414 by a projection 415 (of the environment of the vehicle 101 from the point of view of the vehicle) to generate a "feature point cloud" 416.

These feature point clouds 416 are accumulated over a sequence of LiDAR frames by an accumulation 417 to arrive at an accumulated feature point cloud 418. The features of the accumulated feature point cloud 418 are then accumulated via max-pooling 419 over the z-axis into BEV space to arrive at BEV pseudo-labels 420 (or in other words: a ground truth BEV feature map) for distillation. This allows computing a loss L_{distill} between the BEV feature map 407 and the BEV pseudo-labels 420.

In more detail, for example the DINOv2 features 413 are projected onto the LiDAR point cloud 414 using known camera intrinsics and extrinsics and for each visible LiDAR point $p ∈ {ℝ}^{3}$, image features (from the DINOv2 features 413) from all views that observe **p** are sampled and the average is assigned as f_{DINO}(**p**). To generate dense supervision and get supervision for occluded regions, LiDAR point clouds are accumulated over a sequence to create a dense static point cloud and also points per object are aggregated in object-centric coordinates using ground-truth bounding boxes and tracks. These point sets are voxelized and then average-pooled along the height axis (i.e. z-axis) to obtain a dense 2D BEV feature grid: ${F}_{BEV}^{pseudo} \left(x, y\right) = \frac{1}{\left|{ν}_{x , y}\right|} {\sum }_{{p}_{i} ∈ {ν}_{x , y}} {f}_{DINO} \left({p}_{i}\right)$ where 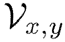 is the set of voxelized 3D points falling into BEV (feature map) cell (x, y). The resulting ${F}_{BEV}^{pseudo}$ are used for supervision during training of the BEV feature distillation, i.e. for calculating a distillation loss 421, denoted by 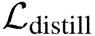 .

The distillation loss 421 is for example determined by adding a linear projection head g(·) to map the BEV features 407 to the DINOv2 feature space and minimize the cosine similarity loss: ${L}_{distill} = \frac{1}{\left|Ω\right|} {\sum }_{\left(x, y\right) ∈ Ω} \left(1-{sim}_{cos}\left(g\left({F}_{BEV}\left(x, y\right)\right),{F}_{BEV}^{pseudo}\left(x, y\right)\right)\right) .$ where Ω is the set of BEV cells with valid LIDAR-projected DINOv2 features. This enables the BEV feature distillation model to learn semantic and geometric priors from rich DINOv2 representations while maintaining end-to-end detection and tracking supervision.

As total training loss, the following loss is for example used: ${L}_{total} = {λ}_{det} {L}_{det} + {λ}_{distill} {L}_{distill} + {λ}_{depth} {L}_{depth}$ where 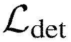
is a task loss and for example includes classification (focal loss), bounding box regression (L1 loss), yawness (cross-entropy), and centerness (focal loss) 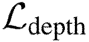
supervises both the LSS depth estimator (binary cross-entropy) and an auxiliary depth head on PV features (L1 loss).

The loss weights λ·may be set empirically to balance training dynamics.

The parameters (i.e. typically weights) of the models involved in the detection and tracking (adapter 403, BEV feature encoder 406 and object detection and/or tracking model 409) are adapted to reduce this total training loss, i.e. the total training loss is back-propagated through these models and their weights are adapted in direction of decreasing loss.

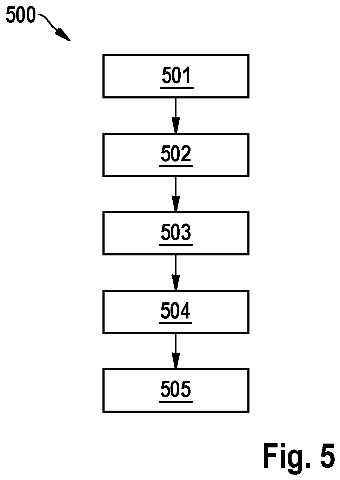

In summary, according to various embodiments, a method is provided as illustrated in figure 5.

Figure 5 shows a flow diagram 500 illustrating a method for detecting an object in an environment of a robot device.

In 501, one or more images of the environment are collected from a point of view of the robot device. The one or more images for example cover a surround view of the robot device such that they hold sufficient information for a bird's eye view of the vehicle.

In 502, point of view features are extracted from the one or more images. Feature extracting is for example performed by a machine learning model, e.g. including one or more convolutional neural network layers. The features may be features on different scales.

In 503, bird's eye view features are extracted from the point of view features.

In 504, map features are determined from a map of the environment (this may also happen before or in a parallel to 501, 502, and/or 503).

In 505, one or more objects in the environment are detected by a machine learning model, wherein the machine learning model is supplied with the point of view features, the bird's eye features and the map features and combines the point of view features, the bird's eye features and the map features using one or more cross-attention layers.

Further, according to various embodiments, an online estimated neural BEV map is distilled from projected accumulated image encoder (e.g. DINOv2) features to guide the detection and tracking head and to capture the whole control scene (e.g. traffic situation) in a map. Leveraging foundation model knowledge from an image encoder like DINOv2 enables a richer, more descriptive representation of the scene beyond predefined BEV map classes.

The approach of figure 5 can be used to compute a control signal for controlling a robot device, like e.g. a computer-controlled machine, like a robot, a vehicle, a domestic appliance, a power tool, a manufacturing machine, a personal assistant or an access control system. According to various embodiments, a result of object detection and/or tracking is used as an input for a policy for controlling the robot device and then the robot device may be operated accordingly.

Various embodiments may receive and use image data (i.e. digital images) from various visual sensors (cameras) such as video, radar, LiDAR, ultrasonic, thermal imaging, motion, sonar etc., for example as a basis for the descriptor images.

The method of Figure 5 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

According to one embodiment, the recognition or detection of one or more objects by the machine learning model in a training image (for its training) or in an image fed to it when it is used after training is to be understood as the recognition of the one or more objects (e.g. by classification and/or segmentation) on the basis of the pixel values of the respective image.

## Claims

1. A method for detecting an object in an environment of a robot device (101), comprising:
Collecting (501) one or more images (201, 401) of the environment from a point of view of the robot device (101);
Extracting (502) point of view features (204, 316, 404) from the one or more images (201, 401);
Determining (503) bird's eye view features (204, 317, 407, 408) from the point of view features (204, 316, 404);
Determining (504) map features (207, 412) from a map of the environment; and
Detecting (505) one or more objects in the environment by a machine learning model (208, 300, 409), wherein the machine learning model (208, 300, 409) is supplied with the point of view features (204, 316, 404), the bird's eye features (204, 317, 407, 408) and the map features (207, 412) and combines the point of view features (204, 316, 404), the bird's eye features (204, 317, 407, 408) and the map features (207, 412) using one or more cross-attention layers (304, 306, 311, 312).

2. The method of claim 1, wherein the one or more cross-attention layers (304, 306, 311, 312) are deformable aggregation layers.

3. The method of claim 1 or 2, wherein the machine learning model (208, 300, 409) has a transformer architecture.

4. The method of any one of claims 1 to 3, comprising performing detection of one or more objects repeatedly over time and tracking the one or more objects by correlating detected object instances.

5. The method of any one of claims 1 to 4, comprising extracting point of view features (204, 316, 404) from the one or more images (201, 401) by a pre-trained image encoder model (203, 402).

6. The method of any one of claims 1 to 5, comprising determining the bird's eye view features (204, 317, 407, 408) from the point of view features (204, 316, 404) by a bird's eye view feature distillation model and training at least the bird's eye view feature distillation model using a supervised loss determined from pseudo-labels for bird's eye view features (204, 317, 407, 408), wherein the pseudo-labels for bird's eye view features (204, 317, 407, 408) are determined by projecting the point of view features (204, 316, 404) to a LiDAR point cloud of the environment followed by pooling point of view features over the height axis.

7. The method of any one of claims 1 to 6, comprising, for each time point of a sequence of time points, collecting one or more images (201, 401) of the environment from a point of view of the robot device (101), extracting point of view features (204, 316, 404) from the one or more images (201, 401) and projecting the point of view features (204, 316, 404) to a respective LiDAR point cloud of the environment, wherein determining the pseudo-labels further comprises accumulating the projected point of view features over at least some of the sequence of times points.

8. A method for controlling a robot device (101), comprising performing detection of one or more objects in an environment of the robot device (101) according to any one of claims 1 to 7 and controlling the robot device (101) according to a result of the detection.

9. A data processing device (102), configured to perform a method of any one of claims 1 to 8.

10. A computer program comprising instructions which, when executed by a computer, makes the computer perform a method according to any one of claims 1 to 8.

11. A computer-readable medium comprising instructions which, when executed by a computer, makes the computer perform a method according to any one of claims 1 to 8.

## Amended claims

### Amended claims in accordance with Rule 137(2) EPC.

1. A method for detecting an object in an environment of a robot device (101), comprising:
Collecting (501) one or more images (201, 401) of the environment from a point of view of the robot device (101);
Extracting (502) point of view features (204, 316, 404) from the one or more images (201, 401);
Determining (503) bird's eye view features (204, 317, 407, 408) from the point of view features (204, 316, 404);
Determining (504) map features (207, 412) from a map of the environment; and
Detecting (505) one or more objects in the environment by a machine learning model (208, 300, 409), wherein the machine learning model (208, 300, 409) is supplied with the point of view features (204, 316, 404), the bird's eye features (204, 317, 407, 408) and the map features (207, 412) and combines the point of view features (204, 316, 404), the bird's eye features (204, 317, 407, 408) and the map features (207, 412) using one or more cross-attention layers (304, 306, 311, 312), wherein the one or more cross-attention layers (304, 306, 311, 312) are deformable aggregation layers.

2. The method of claim 1, wherein the machine learning model (208, 300, 409) has a transformer architecture.

3. The method of claims1 or 2, comprising performing detection of one or more objects repeatedly over time and tracking the one or more objects by correlating detected object instances.

4. The method of any one of claims 1 to 3, comprising extracting point of view features (204, 316, 404) from the one or more images (201, 401) by a pre-trained image encoder model (203, 402).

5. The method of any one of claims 1 to 4, comprising determining the bird's eye view features (204, 317, 407, 408) from the point of view features (204, 316, 404) by a bird's eye view feature distillation model and training at least the bird's eye view feature distillation model using a supervised loss determined from pseudo-labels for bird's eye view features (204, 317, 407, 408), wherein the pseudo-labels for bird's eye view features (204, 317, 407, 408) are determined by projecting the point of view features (204, 316, 404) to a LiDAR point cloud of the environment followed by pooling point of view features over the height axis.

6. The method of claim 5, comprising, for each time point of a sequence of time points, collecting one or more images (201, 401) of the environment from a point of view of the robot device (101), extracting point of view features (204, 316, 404) from the one or more images (201, 401) and projecting the point of view features (204, 316, 404) to a respective LiDAR point cloud of the environment, wherein determining the pseudo-labels further comprises accumulating the projected point of view features over at least some of the sequence of times points.

7. A method for controlling a robot device (101), comprising performing detection of one or more objects in an environment of the robot device (101) according to any one of claims 1 to 6 and controlling the robot device (101) according to a result of the detection.

8. A data processing device (102), configured to perform a method of any one of claims 1 to 7.

9. A computer program comprising instructions which, when executed by a computer, makes the computer perform a method according to any one of claims 1 to 7.

10. A computer-readable medium comprising instructions which, when executed by a computer, makes the computer perform a method according to any one of claims 1 to 7.
